# EUROPÄISCHE PATENTSCHRIFT

(11) **EP 3 273 210 B1**
(45) Veröffentlichungstag und Bekanntmachung des Hinweises auf die Patenterteilung: **18.05.2022**
(21) Anmeldenummer: 16179986.1
(22) Anmeldetag: 18.07.2016
(51) Int. Cl.: G01H 3/00, G01H 11/06, G01F 23/296, G10K 11/00, G10K 11/24, B06B 1/02, G10K 9/22

(54) **VIBRATIONSGRENZSTANDSSCHALTER UND VERFAHREN ZUR HERSTELLUNG EINES VIBRATIONSGRENZSTANDSSCHALTER**
VIBRATING LEVEL SWITCH AND METHOD FOR PRODUCING A VIBRATING LEVEL SWITCH
DÉTECTEUR DE NIVEAU À LAMES VIBRANTES ET SON PROCEDE DE FABRICATION

(43) Veröffentlichungstag der Anmeldung: 24.01.2018
(73) Patentinhaber: VEGA Grieshaber KG, 77709 Wolfach (DE)
(72) Erfinder: Allgaier, Volker, 77716 Haslach i. K. (DE); Fehrenbach, Dominik, 78628 Rottweil (DE)
(74) Vertreter: Patentanwälte Bauer Vorberg Kayser

(56) Entgegenhaltungen:
- EP-A2- 2 148 322
- DE-A1- 4 203 715
- DE-A1-102012 100 728
- DE-A1-102014 115 589

## Beschreibung

Die vorliegende Erfindung betrifft einen Vibrationsgrenzstandschalter gemäß dem Oberbegriff des Patentanspruchs 1 sowie ein Verfahren zum Herstellen eines mechanischen Schwingers eines Vibrationsgrenzstandschalters gemäß Patentanspruch 8.

Nach dem Stand der Technik sind Vibrationssensoren, die als Vibrationsgrenzstandschalter verwendet werden, bekannt, wobei der Vibrationssensor eine über einen Antrieb zu einer Schwingung anregbare Membran aufweist, mittels der ein an der Membran angeordneter mechanischer Schwinger zu einer Schwingung anregbar ist. Abhängig von einem Bedeckungsstand des mechanischen Schwingers mit einem Füllgut sowie abhängig von der Viskosität und der Dichte dieses Füllgutes schwingt dieser mit einer charakteristischen Frequenz, die von dem Vibrationssensor detektiert werden und in ein Messsignal umgewandelt werden kann.

Die mechanischen Schwinger solcher Vibrationssensoren werden beispielsweise durch Metallspritzguß, Guß oder Vakuumguß hergestellt und weisen gemäß dem Stand der Technik eine massive, d. h. vollständig ausgefüllte Form im Bereich des mechanischen Schwingers auf.

Abhängig von der Masse und Formgebung des mechanischen Schwingers weist dieser ein charakteristisches Schwingungsverhalten in Luft sowie in entsprechenden Messmedien hinsichtlich Frequenz und/oder Amplitude sowie hinsichtlich eines Abklingverhaltens nach einer Anregung auf. In der Regel wird zur Ermittlung des Messsignals eine Frequenzänderung zwischen der Schwingungsfrequenz in der Luft, der sogenannten Luftfrequenz, und der Schwingungsfrequenz eingetaucht im Messmedium, der sogenannten Mediumsfrequenz, ermittelt.

Aus dem Stand der Technik bekannten Vibrationssensoren wird es nachteilig empfunden, dass die Frequenzänderung von der Luftfrequenz zur Mediumsfrequenz teilweise nicht ausreichend groß ist um Fehldetektionen aufgrund von druckinduzierten und/oder temperaturinduzierten Frequenzschwankungen auszuschließen. Weiterer Stand der Technik ist aus DE 42 03 715 A1, DE 10 2014 115 589 A1 und EP 2 148 322 A2 und DE 10 2012 100 728 A1 bekannt.

Es ist die Aufgabe der vorliegenden Erfindung eine Frequenzänderung zwischen der Luftfrequenz und der Mediumsfrequenz zu optimieren, d. h. insbesondere möglichst groß zu gestalten.

Diese Aufgabe wird durch einen Vibrationsgrenzstandschalter mit den Merkmalen des Patentanspruchs 1 gelöst. Ein erfindungsgemäßer Vibrationsgrenzstandschalter kann durch das Verfahren zur Herstellung eines mechanischen Schwingers eines Vibrationsgrenzstandschalters gemäß Anspruch 8 hergestellt werden.

Ein erfindungsgemäßer Vibrationsgrenzstandschalter mit einer über einen Antrieb zu einer Schwingung anregbaren Membran und einem an der Membran angeordneten mechanischen Schwinger zeichnet sich dadurch aus, dass der mechanische Schwinger eine Hülle mit wenigstens einem geschlossenen Innenraum aufweist. In einer grundlegenden Ausgestaltung ist der mechanische Schwinger gemäß der vorliegenden Erfindung damit hohl ausgestaltet. Dies führt zu einer Gewichtsreduktion im Vergleich zu massiv, d. h. gefüllt ausgestalteten mechanischen Schwingern, zu einer erhöhten Luftfrequenz des mechanischen Schwingers sowie zu einer größeren Frequenzänderung bei Bedeckung des mechanischen Schwingers mit einem Messmedium. Durch eine größere Frequenzänderung werden Fehldetektionen verhindert, so dass insgesamt ein verbessertes Messeergebnis erreicht werden kann.

Um eine Wandstärke des mechanischen Schwingers weiter zu reduzieren und dennoch eine hohe Stabilität des mechanischen Schwingers erreichen zu können, ist in dem Innenraum des mechanischen Schwingers eine Füllung, insbesondere eine Füllung mit einer gegenüber der Hülle reduzierten Dichte angeordnet.

Durch Anordnung einer Füllung im Innenraum des mechanischen Schwingers wird verhindert, dass dieser bei mechanischen Belastungen sehr leicht beschädigt und die Hülle beispielsweis durchstoßen oder verformt wird.

Die Füllung ist zur Stabilisierung des mechanischen Schwingers als Stützstruktur mit einer Mehrzahl von Hohlkammern und dazwischen angeordneten Stegen ausgebildet. Durch eine entsprechende Stützstruktur beispielsweise eine regelmäßig ausgebildete Struktur, die in einem Querschnitt z. B. wabenartig ausgebildet sein kann, wird eine deutliche Erhöhung der Stabilität und Steifigkeit des mechanischen Schwingers erreicht, so dass über die Membran eingeleitete Schwingungen zuverlässig auf den mechanischen Schwinger übertragen werden.

Alternativ zu einer regelmäßig ausgebildeten Struktur kann der Innenraum auch mit einem geschäumten Material, vorzugsweise einem geschäumten Metall, ausgefüllt sein. Geschäumte Materialien, insbesondere geschäumte Metalle weisen ebenfalls eine hohe Steifigkeit bei gleichzeitiger Gewichtsreduktion auf.

Die Hülle und/oder die Stützstruktur weist vorzugsweise eine Wandstärke zwischen 50 µm und 500 µm, vorzugsweise zwischen 100 µm und 400 µm weiter vorzugsweise 300 µm.

Ein Verfahren zur Herstellung eines mechanischen Schwingers eines Vibrationsgrenzstandschalters gemäß der vorliegenden Erfindung zeichnet sich dadurch aus, dass wenigstens eine Hülle des mechanischen Schwingers mit wenigstens einem abgeschlossenen Innenraum ausgebildet und durch ein generatives Fertigungsverfahren hergestellt wird. Im Vergleich zu den bekannten Herstellungsverfahren ist eine hohle Struktur durch ein generatives Fertigungsverfahren, beispielsweise eine 3-D-Druckverfahren besonders einfach herstellbar. Die Hülle kann beispielsweise mit einem Metallschaum ausgeschäumt werden oder es kann eine Metallschaumstruktur mit einer Hülle in einem 3-D-Druckverfahren umdruckt werden.

Alternativ können die Hülle sowie eine in der Hülle angeordnete Stützstruktur gemeinsam in einem 3-D-Druckverfahren gedruckt werden, wobei sich ein 3-D-Siebdruckverfahren besonders für die Ausbildung hohler Strukturen eignet, da bei einem 3-D-Siebdruckverfahren keine Rückstände des bei 3-D-Druckverfahren typischerweise verwendeten Pulvermaterials in den Hohlräumen zurückbleiben.

Die vorliegende Erfindung wird nachfolgend anhand eines Ausführungsbeispiels und unter Bezugnahme auf die beigefügten Figuren eingehend erläutert. Es zeigen:
- Figur 1: eine perspektivische Ansicht eines mechanischen Schwingers gemäß der vorliegenden Anmeldung,
- Figur 2: die Stützstruktur des mechanischen Schwingers aus Figur 1 in perspektivischer Ansicht und
- Figur 3: einen Querschnitt durch den mechanischen Schwinger aus Figur 1.

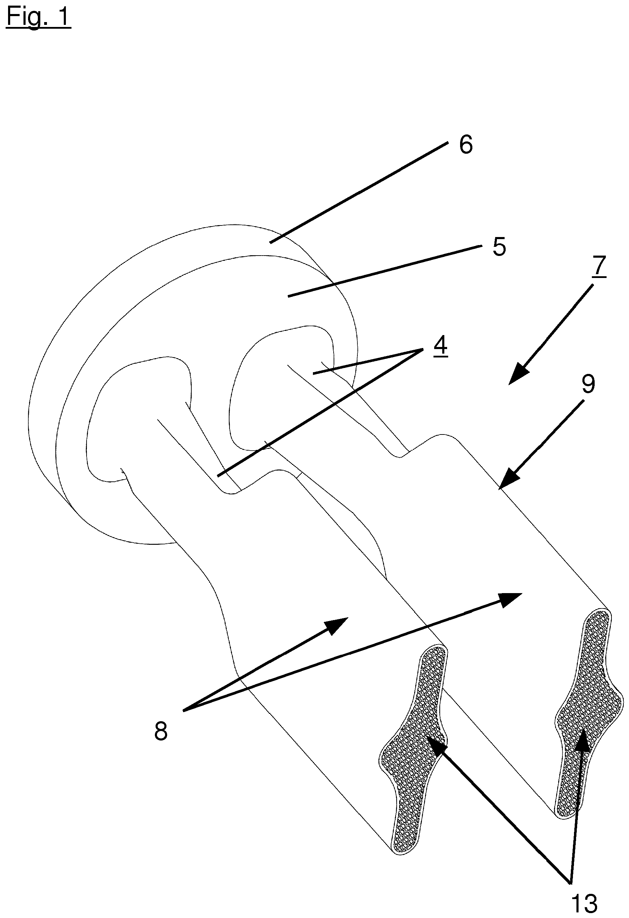

Figur 1 zeigt einen mechanischen Schwinger 7 eines Vibrationssensors 1, der im Wesentlichen als eine an einer Membran 5 angeordnete Stimmgabel ausgebildet ist. Der mechanische Schwinger 7 weist im vorliegenden Ausführungsbeispiel zwei parallel zueinander angeordnete Paddel 8 auf, die über jeweils ein Zwischenstück 4 an der Membran 5 angeordnet und mit dieser verbunden sind.

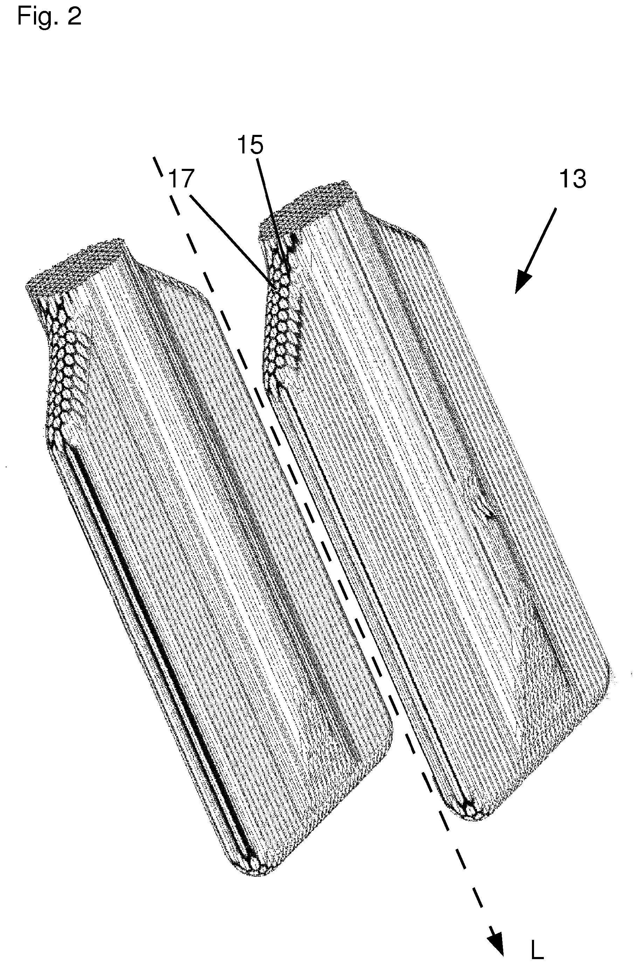

Im vorliegenden Ausführungsbeispiel sind die Paddel 8 mit einer Hülle 9 sowie einem mit einer als Stützstruktur ausgebildeten Füllung 13 gefüllten Innenraum 11 ausgebildet. Durch das Anordnen der Stützstruktur 13 in der Hülle 9 wird die Verringerung der Stabilität des mechanischen Schwingers 7 minimiert, bei gleichzeitiger Massereduktion, im Vergleich zu einer massiv aufgebauten Variante. Der beispielhafte Aufbau der Füllung 13 sowie deren Ausgestaltung als Stützstruktur ist besonders gut in Figur 2 zu erkennen. In dieser Darstellung wird besonders deutlich, dass die Füllung 13 mit einer Vielzahl in Längsrichtung der Paddel 8 verlaufenden Hohlkammern 15 versehen ist, die durch Stege 17 begrenzt werden.

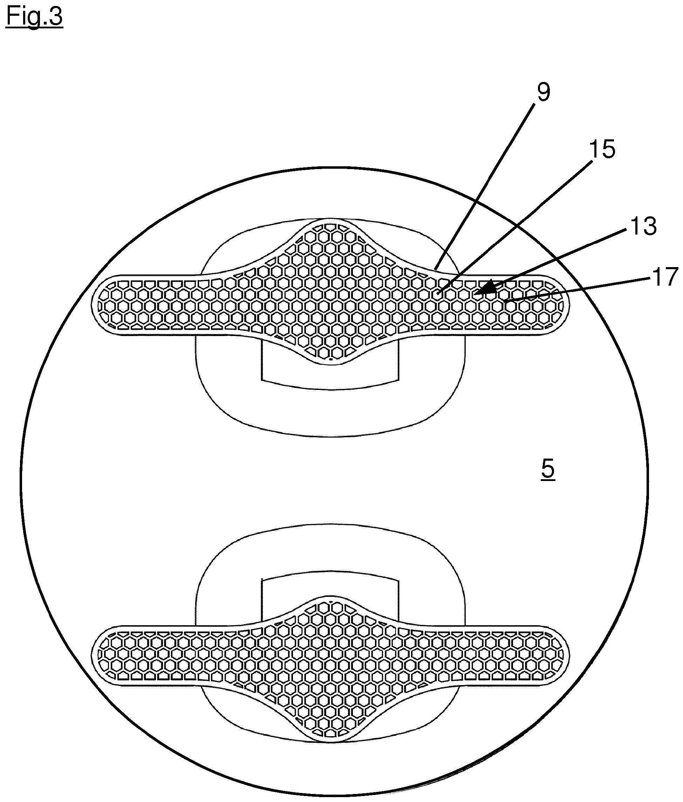

Der Aufbau der Stützstruktur 13 sowie deren Anordnung innerhalb der Hülle 9 ist besonders gut in dem in Figur 3 dargestellten Querschnitt durch die Paddel 8 zu erkennen. Innerhalb der Hülle 9, die im vorliegenden Ausführungsbeispiel eine Dicke von 300 µm aufweist ist eine wabenförmige Stützstruktur 13 angeordnet. Die Stützstruktur 13 ist im Wesentlichen durch die Hohlkammern 15 begrenzende Stege 17 die in Längsrichtung L verlaufende hexagonale Kapillare definieren gebildet. Durch eine derartige Struktur wird eine verwindungssteife und stabile Struktur der Paddel 8 gewährleistet, wobei gleichzeitig deren Gewicht deutlich reduziert wird. Die Stege 17 weisen im vorliegenden Ausführungsbeispiel eine Wandstärke von etwa 50 µm auf.

Durch eine Gewichtsreduktion des mechanischen Schwingers 7 weist dieser eine höhere Resonanzfrequenz in Luft sowie eine größere Frequenzänderung beim Eintauchen in ein Füllmedium im Vergleich zu massiv ausgebildeten mechanischen Schwingern auf, so dass auf diese Weise ein deutlich verbessertes Messverhalten erreicht werden kann. Auf diese Weise wird ein verbesserter Signal-Hub oder im übertragenen Sinne ein verbesserter Signal-Rausch-Abstand erreicht.

Der mechanische Schwinger 7 gemäß der vorliegenden Anmeldung wird vorzugsweise mit einem generativen Herstellungsverfahren, insbesondere mit einem 3-D-Druckverfahren, insbesondere 3-D-Siebdruckverfahren hergestellt. Durch ein solches 3-D-Druckverfahren können die Hülle 9 und die Stützstruktur 13 gemeinsam hergestellt werden.

Bei 3D-Siebdruck-Verfahren können Abstände von über 1mm überdruckt werden.

Ferner können Hohlräume mittels entsprechender Bohrtechnik erstellt werden. Bohrer können heutzutage sehr kleine Durchmesser bis hin zu 0,1 mm haben. Begrenzend, ist lediglich, dass bei langen Bohrlöchern die Bohrer brechen oder keine absolut geraden Bohrungen mehr möglich sind. Nach einem solchen Bohrvorgang könnte die Oberseite wieder mittels einer Schweißung verschlossen werden.

### Bezugszeichenliste

- 1: Vibrationssensor
- 3: Antrieb
- 5: Membran
- 6: Kragen
- 7: Mechanischer Schwinger
- 8: Paddel
- 9: Hülle
- 11: Innenraum
- 13: Füllung/Stützstruktur
- 15: Hohlkammern
- 17: Stege
- L: Längsrichtung

## Patentansprüche

1. Vibrationsgrenzstandschalter (1) mit einer über einen Antrieb (3) zu einer Schwingung anregbaren Membran (5) und einem an der Membran (5) angeordneten mechanischen Schwinger (7),
wobei
der mechanische Schwinger (7) eine Hülle (9) mit wenigstens einem geschlossenen Innenraum (11) aufweist, wobei in dem Innenraum (11) eine Füllung (13) angeordnet ist, **dadurch gekennzeichnet, dass** die Füllung (13) als Stützstruktur (13) mit einer Mehrzahl von Hohlkammern (15) und dazwischen angeordneten Stegen (17) ausgebildet ist.

2. Vibrationsgrenzstandschalter (1) gemäß Anspruch 1,
**dadurch gekennzeichnet, dass** die Füllung (13) eine gegenüber der Hülle (9) reduzierte Dichte aufweist.

3. Vibrationsgrenzstandschalter (1) gemäß einem der vorhergehenden Ansprüche,
**dadurch gekennzeichnet, dass** die Stützstruktur (13) regelmäßig ausgebildet ist.

4. Vibrationsgrenzstandschalter (1) gemäß Anspruch 1,
**dadurch gekennzeichnet, dass** die Stützstruktur (13) in einem Querschnitt wabenartig ausgebildet ist.

5. Vibrationsgrenzstandschalter (1) gemäß Anspruch 1,
**dadurch gekennzeichnet, dass** die Stützstruktur (13) in einem Querschnitt rund ausgebildete Hohlkammern aufweist.

6. Vibrationsgrenzstandschalter (1) gemäß Anspruch 1,
**dadurch gekennzeichnet, dass** der Innenraum (11) mit einem geschäumten Material, vorzugsweise einem geschäumten Metall, ausgefüllt ist.

7. Vibrationsgrenzstandschalter (1) gemäß einem der vorhergehenden Ansprüche,
**dadurch gekennzeichnet, dass** die Hülle (9) und/oder die Stützstruktur (13) eine Wandstärke zwischen 50 µm und 500 µm, vorzugsweise 100 µm und 400 µm weiter vorzugsweise 300 µm aufweist.

8. Verfahren zur Herstellung eines mechanischen Schwingers (7) eines Vibrationsgrenzstandschalters (1) nach Anspruch 1 , wobei wenigstens eine Hülle (9) des mechanischen Schwingers (7) mit wenigstens einem abgeschlossenen Innenraum (9) durch ein generatives Fertigungsverfahren ausgebildet wird.

9. Verfahren gemäß Anspruch 8,
**dadurch gekennzeichnet, dass** das generative Fertigungsverfahren ein 3D-Druckverfahren ist.

10. Verfahren gemäß einem der Ansprüche 8 oder 9,
**dadurch gekennzeichnet, dass** der Innenraum (13) mit einem Metallschaum ausgeschäumt wird.

11. Verfahren gemäß Anspruch 8,
**dadurch gekennzeichnet, dass** ein Metallschaum mit der Hülle (9) in einem 3D-Druckverfahren umdruckt wird.

12. Verfahren gemäß Anspruche 8,
**dadurch gekennzeichnet, dass** die Hülle (9) sowie eine in der Hülle (9) angeordnete Stützstruktur (13) gemeinsam gedruckt werden.

13. Verfahren gemäß Anspruch 11,
**dadurch gekennzeichnet, dass** die Hülle (9) und die Stützstruktur (13) mit einem 3D-Siebdruckverfahren gedruckt werden.

## Claims

1. A vibration level switch (1) with a diaphragm (5) that can be excited to vibrate via a drive unit (3), and a mechanical vibrator (7) arranged at the diaphragm (5), wherein
the mechanical vibrator (7) comprises a shell (9) with at least one closed interior space (11), wherein a filler (13) is disposed in the interior space (11), **characterized in that** the filling (13) is configured as a support structure (13) with a plurality of hollow chambers (15) and webs (17) disposed between them.

2. The vibration level switch (1) according to claim 1,
**characterized in that**
the filling (13) has a density reduced in comparison with the shell (9).

3. The vibration level switch (1) according to any one of the preceding claims,
**characterized in that**
the support structure (13) has a regular configuration.

4. The vibration level switch (1) according to claim 1,
**characterized in that**
in a cross-section, the support structure (13) has a honeycomb-like configuration.

5. The vibration level switch (1) according to claim 1,
**characterized in that**
in a cross-section, the support structure (13) has hollow chambers with a round configuration.

6. The vibration level switch (1) according to claim 1,
**characterized in that**
the interior space (11) is filled with a foamed material, preferably a foamed metal.

7. The vibration level switch (1) according to any one of the preceding claims,
**characterized in that**
the shell (9) and/or the support structure (13) have a wall thickness between 50 µm and 500 µm, preferably between 100 µm and 400 µm, more preferably 300 µm.

8. A method for producing a mechanical vibrator (7) of a vibration level switch (1) according to claim 1, wherein at least a shell (9) of the mechanical vibrator (7) with at least one closed interior space (9) is formed by a generative fabrication method.

9. The method according to claim 8,
**characterized in that**
the generative fabrication method is a 3-D printing method.

10. The method according to any one of the claims 8 or 9,
**characterized in that**
the interior space (13) is foam-filled with a metal foam.

11. The method according to claim 8,
**characterized in that**
the shell (9) is printed around the metal foam with a 3-D printing method.

12. The method according to claim 8,
**characterized in that**
the shell (9) and a support structure (13) disposed within the shell (9) are printed together.

13. The method according to claim 11,
**characterized in that**
the shell (9) and the support structure (13) are printed using a 3-D screen printing method.

## Revendications

1. Détecteur de niveau à lames vibrantes (1) comprenant une membrane (5) qui peut être excitée pour vibrer par l'intermédiaire d'un mécanisme d'entraînement (3), ainsi qu'un vibreur mécanique (7) qui est disposé sur la membrane (5), dans lequel ledit vibreur mécanique (7) comprend une enveloppe (9) ayant au moins un volume intérieur fermé (11), dans lequel un remplissage (13) est disposé dans le volume intérieur (11), **caractérisé par le fait que** le remplissage (13) est réalisé en tant que structure de support (13) comprenant une pluralité de chambres creuses (15) et des âmes (17) disposées entre elles.

2. Détecteur de niveau à lames vibrantes (1) selon la revendication 1, **caractérisé par le fait que** le remplissage (13) présente une densité réduite par rapport à l'enveloppe (9).

3. Détecteur de niveau à lames vibrantes (1) selon l'une quelconque des revendications précédentes, **caractérisé par le fait que** la structure de support (13) est conçue de manière régulière.

4. Détecteur de niveau à lames vibrantes (1) selon la revendication 1, **caractérisé par le fait que** la structure de support (13) est conçue en nid d'abeille en une section transversale.

5. Détecteur de niveau à lames vibrantes (1) selon la revendication 1, **caractérisé par le fait que** la structure de support (13) comprend des chambres creuses qui sont conçues de manière ronde en une section transversale.

6. Détecteur de niveau à lames vibrantes (1) selon la revendication 1, **caractérisé par le fait que** le volume intérieur (11) est rempli d'un matériau moussé, de préférence d'un métal moussé.

7. Détecteur de niveau à lames vibrantes (1) selon l'une quelconque des revendications précédentes, **caractérisé par le fait que** ladite enveloppe (9) et/ou ladite structure de support (13) présente une épaisseur de paroi comprise entre 50 µm et 500 µm, de préférence entre 100 µm et 400 µm, en plus de préférence 300 µm.

8. Procédé de réalisation d'un vibreur mécanique (7) d'un détecteur de niveau à lames vibrantes (1) selon la revendication 1, dans lequel au moins une enveloppe (9) du vibreur mécanique (7) avec au moins un volume intérieur fermé (9) est formée par un procédé de fabrication générative.

9. Procédé selon la revendication 8, **caractérisé par le fait que** le procédé de fabrication générative est un procédé d'impression 3D.

10. Procédé selon l'une quelconque des revendications 8 ou 9, **caractérisé par le fait que** le volume intérieur (13) est rempli d'une mousse métallique.

11. Procédé selon la revendication 8, **caractérisé par le fait qu'**une mousse métallique est entourée de l'enveloppe (9) dans un procédé d'impression 3D.

12. Procédé selon la revendication 8, **caractérisé par le fait que** l'enveloppe (9) ainsi qu'une structure de support (13) qui est disposée dans l'enveloppe (9) sont imprimées ensemble.

13. Procédé selon la revendication 11, **caractérisé par le fait que** ladite enveloppe (9) et la structure de support (13) sont imprimées au moyen d'un procédé de sérigraphie 3D.
